# EUROPEAN PATENT SPECIFICATION

(11) **EP 0 524 916 B1**
(45) Date of publication and mention of the grant of the patent: **20.03.1996**
(21) Application number: 92830377.5
(22) Date of filing: 14.07.1992
(51) Int. Cl.: B60G 7/04, B60G 11/10, F16F 1/22

(54) **A device for connecting a transverse leaf spring to the structure of a motor vehicle**
Vorrichtung zur Verbindung einer Querblattfeder an der Karosserie eines Kraftfahrzeuges
Dispositif pour monter un ressort à lame transversal sur la carrosserie d'un véhicule automobile

(30) Priority: 24.07.1991 IT TO910585
(43) Date of publication of application: 27.01.1993
(73) Proprietor: FIAT AUTO S.p.A., I-10135 Torino (IT)
(72) Inventor: Gandiglio, Romolo, I-10020 Cambiano (Torino) (IT)
(74) Representative: Bosotti, Luciano

(56) References cited:
- EP-A- 0 089 858
- EP-A- 0 415 178
- WO-A-88/02315
- CH-A- 640 789
- DE-C- 462 402
- FR-A- 1 349 363
- FR-A- 2 388 688
- US-A- 2 697 613
- US-A- 3 181 641

## Description

The present invention generally relates to motor vehicle suspensions employing a transverse leaf spring acting as a resilient suspension member for a pair of wheels.

More particularly, the invention relates to the connection of such a transverse leaf spring to the structure of a motor vehicle and aims to provide a connecting device through which the ends of the leaf spring can advantageously be used as upper supports for the respective wheels in the manner of trailing arms.

Such a connection is known from prior art document EP-A-0 089 858, which shows the features of the preamble of claim 1.

According to the invention, this object is achieved by means of a connecting device with the features of claim 1.

By virtue of this solution, the connecting device according to the invention makes it possible to use the ends of the leaf spring as upper control arms for supporting the wheels, allowing the ends to oscillate and correspondingly to deform the free central portion of the spring between the two mountings without, however, exceeding the preset limits for relative vertical travel between wheels and vehicle structure.

Both the connection of the pivot pin of the mounting to the bodywork and the connection between the fixing bracket and the mounting conveniently comprise respective shock-absorbing members.

The invention will now be described in detail with reference to the appended drawings which are supplied purely by way of non-limitative example, in which:
Figure 1 is a schematic elevational view of a part of a transverse leaf spring for motor vehicle suspension, provided with a connecting device according to the invention,
Figure 2 illustrates on an enlarged scale the detail indicated by the arrow II in Figure 1,
Figure 3 is a vertical section taken on the line III-III in Figure 2,
Figure 4 is a vertical section taken on the line IV-IV in Figure 3 and
Figure 5 is a partially-sectioned perspective view of a part of the connecting device.

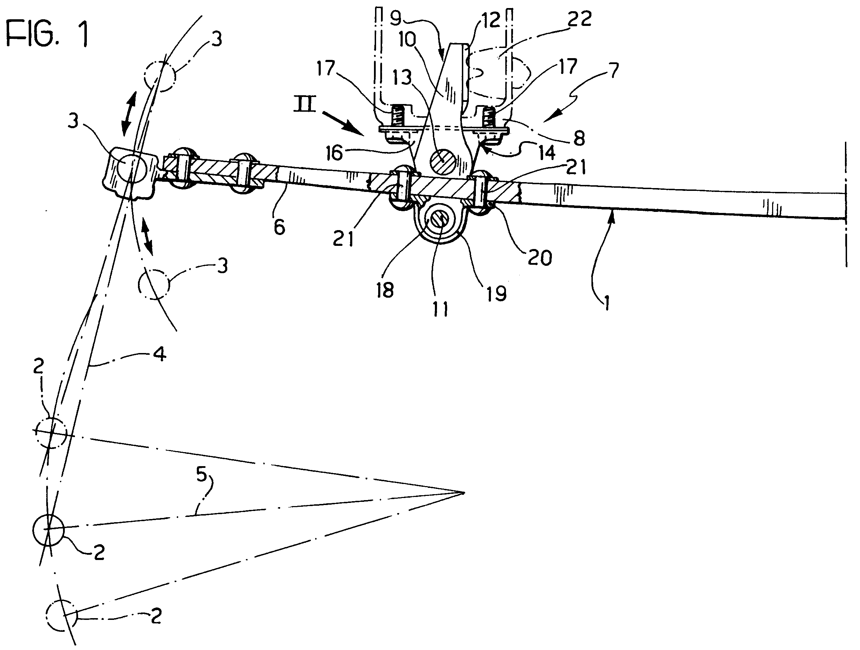

With reference initially to Figure 1, a part of a transverse leaf spring used in the suspension of a pair of wheels of a motor vehicle, for example a pair of front steering wheels, is indicated 1. In the drawing, the respective references 2 and 3 schematically indicate the lower and upper joints of the support for the spindle of one of the wheels, which are aligned with one another about an axis 4 and of which the first is carried by a lower transversal oscillating arm, shown schematically at 5, and the second is carried by an end 6 of the leaf spring 1. The end 6 therefore functions at the same time as an upper control arm and, together with the remaining part of the leaf spring 1, as a resilient wheel-suspension member.

The arrangement for the other wheel is an identical mirror image of that shown in Figure 1 and as such has been omitted for ease of illustration.

The end 6 of the leaf spring 1 or upper control arm of the wheel is defined in relation to the rest of the leaf spring 1 by a mounting, generally indicated as 7, which, together with a specularly identical mounting adjacent the other end of the leaf spring 1, constitutes the device for connecting the spring to the structure of the vehicle, indicated 8.

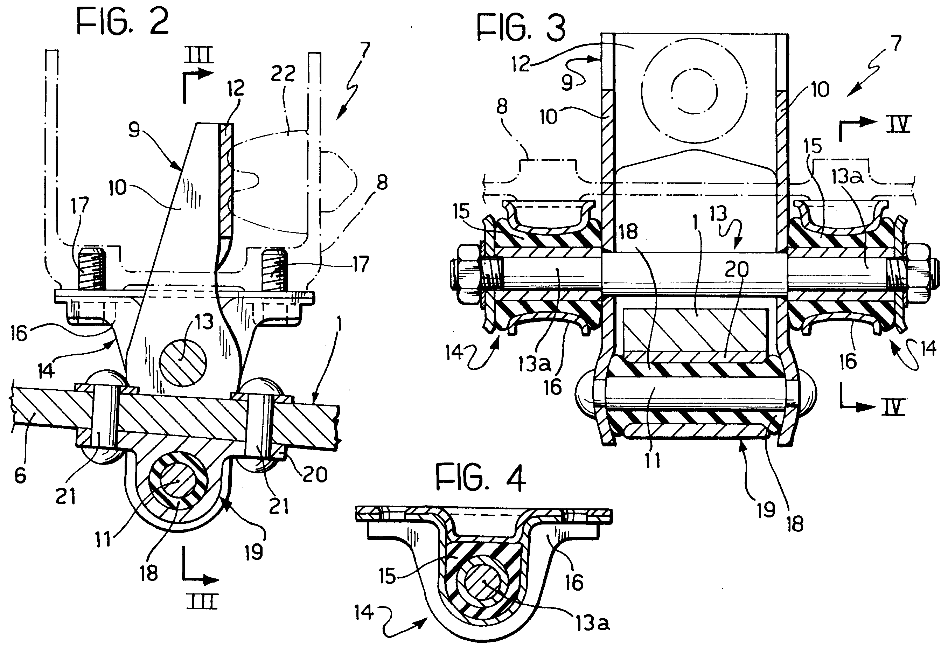

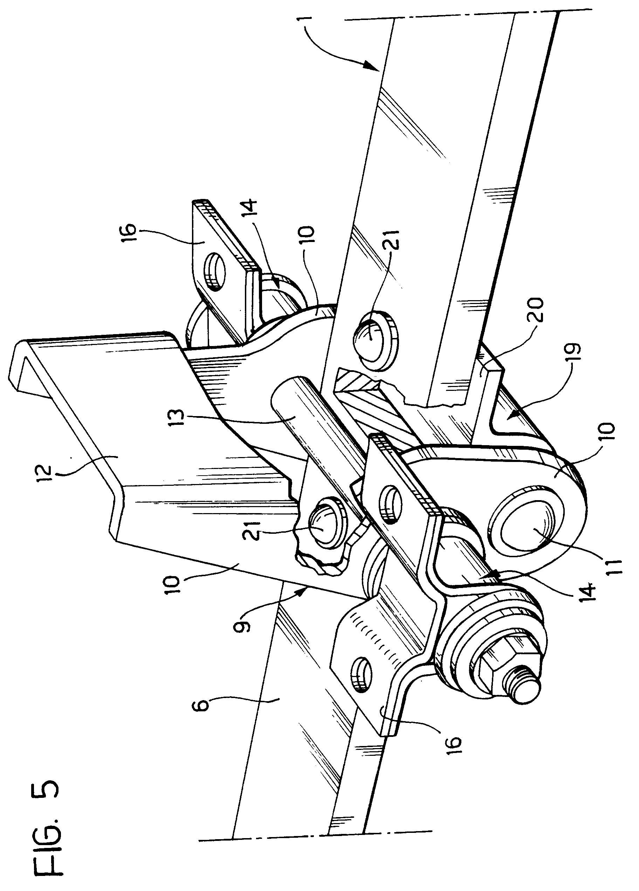

Referring in greater detail to Figures 2 to 5, the mounting 7 includes a pivoting element in the form of a stirrup 9 through which the leaf spring 1 passes and which comprises two lateral walls 10 interconnected below the spring 1 by a transverse pin 11 and above the spring 1 by a striking plate 12.

Immediately above the leaf spring 1, the stirrup element 9 is mounted on a pivot pin 13 the ends of which 13a project beyond the respective lateral walls 10 and are mounted within respective shock-absorbing supports 14. Each support 14 comprises a sleeve of elastomeric material 15 and an outer annular retaining member 16 fixed to the structure 8 of the vehicle by respective screws 17.

A bush 19 is mounted on the lower pin 11 with the interposition of a shock-absorbing sleeve of elastomeric material 18 and its upper part forms a flat bracket member 20 on which the spring 1 bears and is fixed, for example, by means of a pair of rivets 21.

A stop buffer 22 of elastomeric material is fixed to the structure 8 of the vehicle in a position facing the abutment plate 12 of the stirrup member 9 on the inside of the latter, that is, on the side opposite the end 6 with the joint 3. As is better seen in Figures 1 and 2, the stirrup member 9 is free to pivot relative to the supporting structure 8 by the effect of deformations of the leaf spring 1 following the oscillations of the end 6 which, as stated, constitutes the control arm carrying the joint 3. The positions, indicated by broken lines, of the joint 3 on opposite sides of the position of rest, represented by the continuous line in Figure 1, and to which similar positions of the lower joint 2 correspond, demonstrate the extent of the angular travel of the end 6 and hence the amplitude of the relative movement together and apart of the wheels and the vehicle structure 8. The amplitude of the movement together (upper broken-line position of the swivel joint 3) is limited by the abutment between the striking plate 12 and the resilient buffer 22. In fact, during oscillation of the end 6 of the leaf spring 1, the stirrup member 9 pivots about the axis of the pin 13 because of the connection, described above, between the leaf spring 1 and the bottom bracket 20.

## Claims

1. A device for connecting a transverse leaf spring (1) to the structure (8) of a motor vehicle, which comprises a pair of oscillating mountings (7) disposed close to the ends (6) of the leaf spring (1) and each including a pivot pin (13) supported rotatably by the structure (8) of the vehicle at right-angles to and above the spring (1) and carrying on its lower part a bracket (20) for fixing to the spring (1), characterised in that each oscillating mounting (7) Further includes on its upper part a striking arm (12), and the device further comprises at least one stationary resilient stop (22) fixed to the structure (8) of the vehicle laterally of the striking arm (12) of each mounting (7) for abutment by the arm (12) when the oscillation of the mounting (7) about the pin (13) exceeds a predetermined angular magnitude.

2. A device according to Claim 1, characterised in that the pivot pin (13) has ends (13a) projecting from opposite parts of the mounting (7) and mounted in respective shock-absorbing supports (14) fixed to the structure (8) of the vehicle.

3. A device according to Claim 1 or 2, characterised in that the fixing bracket includes a pin (11) which is supported by the mounting (7) parallel to the pivot pin (13) and on which is mounted, with an interposed shock-absorbing sleeve (18), a bush (19) having a flat upper wall (20) on which the spring (1) is rigidly fixed.

## Patentansprüche

1. Vorrichtung zum Verbinden einer querliegenden Blattfeder (1) an die Karosserie (8) eines Kraftfahrzeuges, welche ein Paar schwingender Befestigungen (7) umfaßt, die nahe den Enden (6) der Blattfeder (1) angeordnet sind und von denen jede einen Drehzapfen (13) umfaßt, der drehbar im rechten Winkel zur und oberhalb der Feder (1) von der Karosserie (8) des Fahrzeuges getragen ist und an seinem unteren Teil eine Klammer (20) zum Befestigen der Feder (1) trägt, dadurch gekennzeichnet, daß jede schwingende Befestigung (7) weiters auf ihrem Oberteil einen Anschlagarm (12) umfaßt, wobei die Vorrichtung weiters zumindest einen feststehenden elastischen Anschlag (22) aufweist, der seitlich neben dem Anschlagarm (12) jeder Befestigung (7) an der Karosserie (8) des Fahrzeuges befestigt ist, wobei der Arm (12) am Anschlag anliegt, wenn die Schwingung der Befestigung (7) um den Drehzapfen (13) eine vorbestimmte Winkelgröße überschreitet.

2. Vorrichtung nach Anspruch 1, dadurch gekennzeichnet, daß der Drehzapfen (13) Enden (13a) aufweist, die von gegenüberliegenden Teilen der Befestigung (7) vorstehen und jeweils in stoßabsorbierenden Halterungen (14) befestigt sind, welche an der Karosserie (8) Fahrzeuges fixiert sind.

3. Vorrichtung nach Anspruch 1 oder 2, dadurch gekennzeichnet, daß die Befestigungsklammer einen Zapfen (11) umfaßt, der von der Befestigung (7) parallel zum Drehzapfen (13) getragen ist und auf dem unter Zwischenschaltung einer stoßdämpfenden Hülse (18) eine Buchse (19) montiert ist, die eine ebene Oberseite (20) aufweist, auf der die Feder (1) starr befestigt ist.

## Revendications

1. Dispositif servant à lier un ressort à lame transversal (1) à la structure (8) d'un véhicule à moteur, qui comprend une paire de montures oscillantes (7) disposées à proximité des extrémités (6) du ressort à lame (1) et dont chacune comprend une broche d'articulation (13) supportée rotative par la structure (8) du véhicule perpendiculairement au ressort (1) et au-dessus de ce ressort, et qui porte sur sa partie inférieure une ferrure (20) destinée à être fixée au ressort (1), caractérisé en ce que chaque monture oscillante (7) comprend en outre un bras d'impact (12) sur sa partie supérieure et le dispositif comprend en outre au moins une butée élastique fixe (22) fixée à la structure (8) du véhicule, latéralement au bras d'impact (12) de chaque monture (7) pour être frappé par le bras (12) lorsque l'oscillation de la monture (7) autour de la broche (13) excède une amplitude angulaire prédéterminée.

2. Dispositif selon la revendication 1, caractérisé en ce que la broche d'articulation (13) possède des extrémités (13a) qui font saillie au-delà de parties opposées de la monture (7) et sont montées dans des supports amortisseurs respectifs (14) fixés à la structure (8) du véhicule.

3. Dispositif selon la revendication 1 ou 2, caractérisé en ce que la ferrure de fixation comprend une broche (11) qui est supportée par la monture (7) parallèlement à la broche d'articulation (13) et sur laquelle est montée, avec interposition d'un manchon amortisseur de choc (18), une bague (19) ayant une paroi supérieure plate (20) sur laquelle le ressort (1) est fixé rigidement.
